# EUROPÄISCHE PATENTSCHRIFT

(11) **EP 2 750 914 B1**
(45) Veröffentlichungstag und Bekanntmachung des Hinweises auf die Patenterteilung: **17.04.2019**
(21) Anmeldenummer: 12759008.1
(22) Anmeldetag: 28.08.2012
(51) Int. Cl.: B60K 35/00, G06F 3/048

(54) **VERFAHREN UND VORRICHTUNG ZUM BEREITSTELLEN EINER NUTZERSCHNITTSTELLE, INSBESONDERE IN EINEM FAHRZEUG**
METHOD AND DEVICE FOR MAKING AVAILABLE A USER INTERFACE, IN PARTICULAR IN A VEHICLE
PROCÉDÉ ET DISPOSITIF DE MISE À DISPOSITION D'UNE INTERFACE UTILISATEUR, EN PARTICULIER DANS UN VÉHICULE

(30) Priorität: 03.09.2011 DE 102011112448
(43) Veröffentlichungstag der Anmeldung: 09.07.2014
(73) Patentinhaber: Volkswagen Aktiengesellschaft, 38440 Wolfsburg (DE)
(72) Erfinder: WENGELNIK, Heino, 38442 Wolfsburg (DE); KUHN, Mathias, 14129 Berlin (DE); HOFMANN, Gustav, 38116 Braunschweig (DE); MEDLER, Andreas, 38268 Lengede (DE); ALTHOFF, Frank, 31275 Lehrte (DE)
(86) Internationale Anmeldenummer: PCT/EP2012/003602
(87) Internationale Veröffentlichungsnummer: WO 2013/029773

(56) Entgegenhaltungen:
- DE-A1-102008 034 507
- DE-A1-102008 050 803
- DE-A1-102008 052 485
- DE-A1-102009 048 834

## Beschreibung

Die vorliegende Erfindung betrifft ein Verfahren zum Bereitstellen einer Nutzerschnittstelle, insbesondere in einem Fahrzeug, bei dem ein oder mehrere graphische Objekte auf einer Anzeigefläche mit einer berührungsempfindlichen Oberfläche dargestellt werden, eine einem Bedienbereich der Anzeigefläche zuordenbaren Bedienabsicht berührungslos in einem Raum in Betrachtungsrichtung vor der Anzeigefläche erfasst wird und eine Bedienaktion durch Berühren eines der graphischen Objekte in dem Bedienbereich der Anzeigefläche durchgeführt wird. Die vorliegende Erfindung betrifft des Weiteren eine dazugehörige Vorrichtung zum Bereitstellen einer Nutzerschnittstelle und ein Fahrzeug mit einer solchen Nutzerschnittstelle.

Nutzerschnittstellen mit bedienbaren graphischen Objekten, sogenannte graphische Nutzeroberflächen, werden heutzutage vielfältig eingesetzt. Anwendungsgebiete sind die Computer- und Unterhaltungselektronik sowie Bediensysteme zum Steuern von technischen Geräten, wie z.B. elektrisch, mechanisch und/oder optisch arbeitenden Maschinen oder Automaten für private, gewerbliche oder industrielle Zwecke.

Je nach Nutzungsumfeld kann dabei eine erhebliche Menge an Informationen anfallen, die aufgrund der Menge allein oder in Zusammenwirken mit den zusätzlichen Aufgaben des bedienenden Nutzers die Bedienung unübersichtlich gestalten kann.

Moderne Fahrzeugsinformationssysteme bieten den Fahrzeuginsassen eine Fülle von Informationen. Diese Vielfalt führt jedoch häufig zu langen Bedienvorgängen, um innerhalb einer komplexen Menüstruktur die gewünschte Funktion zu finden und aufzurufen. Dies kann insbesondere zu einer Ablenkung des Fahrers führen, falls er eine bestimmte Bedienfunktion während der Fahrt aufrufen will. Es ist daher wünschenswert, eine Bedienung der verschiedenen Funktionen des Fahrzeugs und darin bedienbaren Informationssysteme bereitzustellen, welche schnell und einfach auszuführen ist. Hierfür ist die Informationsdarbietung und die damit verbundene Eingabe von Bedienfunktionen wichtig.

In der WO 2006/127378 A1 ist eine Vorrichtung zum Anzeigen von Informationen verschiedener Fahrzeugssysteme, wie z.B. Navigationssystemen oder Audiosystemen, beschrieben, bei welcher auf ein definiertes Ereignis ein erstes von zwei angezeigten Anzeigeobjekten visuell hervorgehoben wird, um die Aufmerksamkeit des Nutzers hierauf zu lenken. Dabei kann das andere Anzeigeobjekt zugleich visuell zurücktreten. Das definierte Ereignis kann systemseitig ausgelöst werden oder durch eine Bedienabsicht des Nutzers, die durch die Annäherung des Nutzers an das erste Anzeigeobjekt erfasst wird, erkannt werden. Die visuelle Hervorhebung des ersten Anzeigeobjekts kann beispielsweise einen Wechsel von Größe, Farbe oder Helligkeit dieses Anzeigeobjekts umfassen.

Das Dokument DE 10 2008 050803 A1 offenbart den Oberbegriff der Ansprüche 1 und 8.

Es ist die Aufgabe der vorliegenden Erfindung, ein Verfahren und eine dazugehörige Vorrichtung der eingangs genannten Art bereitzustellen, welche den Bedienungskomfort der Nutzerschnittstelle insbesondere für die Anwendung in einem Fahrzeug erhöht und die Gefahr von Fehleingaben reduzieren kann.

Diese Aufgabe wird erfindungsgemäß durch ein Verfahren mit den Merkmalen des Anspruchs 1 sowie durch eine Vorrichtung mit den Merkmalen des Anspruchs 8 gelöst. Vorteilhafte Aus- und Weiterbildungen ergeben sich aus den abhängigen Ansprüchen.

Das erfindungsgemäße Verfahren ist dadurch gekennzeichnet, dass bei der Zuordnung der Bedienabsicht zu dem Bedienbereich aus einer erfassten Bedienrichtung ein der Bedienabsicht zugeordneter Bedienbereich ermittelt wird, dass die in diesem Bedienbereich dargestellten graphischen Objekte in unterschiedliche Klassen nach dem Kriterium eingeteilt werden, ob das betreffende graphische Objekt in der vorliegenden Bediensituation bedienbar ist oder nicht, dass für die bedienbaren graphischen Objekte dreidimensionale Graphikdaten berechnet und von der flächig wahrnehmbaren Darstellung in der Ebene der Anzeigefläche in eine räumlich wahrnehmbare Darstellung überführt werden, und dass die in der konkreten Situation nicht bedienbaren graphischen Objekte unverändert flächig dargestellt werden oder in einer anderen Art und Weise graphisch verändert werden.

Außerdem gibt ein solcher Wechsel dem Nutzer intuitiv zu erkennen, dass systemseitig für den betreffenden Bedienbereich überhaupt eine Bedienabsicht erkannt wurde. Die Überführung von einer flächigen in eine räumlich wahrnehmbare Darstellung eines Bedienbereichs, in dem möglicherweise mehrere auf diese Weise veränderte graphische Objekte angezeigt werden, kann vom Nutzer auch dann noch diffus als Ganzes wahrgenommen werden, wenn er diesen Bedienbereich noch nicht visuell fokussiert hat. Das erfindungsgemäße Verfahren eignet sich somit besonders gut zum Umschalten von einem Anzeigemodus in einen Bedienmodus in einem Fahrzeug, in welchem der Fahrer bei Bedienaktionen nur für einen möglichst kurzen Zeitraum seinen Blick vom Verkehrsgeschehen abwenden kann.

Die Überführung von einer flächigen in eine räumlich wahrnehmbare Darstellung kann auf verschiedene Art und Weise erfolgen. Die Grundlage dafür ist immer die vorherige Berechnung dreidimensionaler Graphikdaten. Dabei muss nicht das ganze graphische Objekt vollständig dreidimensional wahrnehmbar sein, sondern gegebenenfalls nur ein Teil des Objekts. Beispielsweise werden nur eine Umrandung oder ein Rahmen des graphischen Objekts dreidimensional wahrnehmbar angezeigt oder die dazugehörigen dreidimensionalen Graphikdaten berechnet.

In einer Ausgestaltung des erfindungsgemäßen Verfahrens ist vorgesehen, dass aus den dreidimensional berechneten Graphikdaten sekundäre Graphikdaten für eine perspektivische zweidimensionale Darstellung berechnet werden und das graphische Objekt auf Basis der sekundären Graphikdaten zweidimensional perspektivisch dargestellt wird. Diese Darstellung ist selbst mit Prozessoren mit relativ geringer Leistung zu berechnen und auf einfacheren Displays darzustellen, sodass für das erfindungsgemäße Verfahren gegebenenfalls auch ältere Hardwareversionen verwendet werden können. Eine zweidimensional perspektivische Darstellung kann z.B. als Kante oder Schattenwurf leicht und für den Nutzer intuitiv erfassbar inszeniert werden.

Es kann ferner vorgesehen sein, dass für die räumliche Wahrnehmbarkeit des graphischen Objekts die Anzeigefläche wenigstens zwei räumlich hintereinander liegende Anzeigeebenen umfasst und zumindest zwei verschiedene Bildpunkte des visuell hervorgehobenen graphischen Objekts in verschiednen Anzeigeebenen dargestellt werden. Dies kann z.B. für Projektionsverfahren vorteilhaft sein, bei welchen auf wenigstens eine der Anzeigeebenen Bilder projizierbar sind.

In einer weiteren Ausgestaltung ist vorgesehen, dass die Berechnung der dreidimensionalen Graphikdaten die Berechnung mehrerer stereoskopischer Ansichten des graphischen Objekts umfassen und dass das visuell hervorgehobene graphische Objekt stereoskopisch dargestellt wird. Unter Verwendung sogenannter autostereoskopischer Anzeigeflächen kann diese Ausführungsvariante einfach eingesetzt werden.

Bei autostereoskopischen Anzeigevorrichtungen sieht im Unterschied zu perspektivischen zweidimensionalen Darstellungen das eine Auge ein geringfügig anderes Bild als das andere Auge. Hierdurch wird eine reale dreidimensionale Darstellung erreicht. Dazu werden für verschiedene Betrachtungswinkel leicht unterschiedliche Bilder berechnet. Die Anzahl der so berechneten Bilder beträgt wenigstens zwei, kann aber in bekannten Systemen auch größer als zwanzig sein. Typischerweise sind fünf bis neun Ansichten ein guter Kompromiss zwischen Anforderung an die Rechenleistung und Bildqualität. Bei einer autostereoskopischen Anzeige sind keine speziellen Vorrichtungen, wie beispielsweise Brillen oder dergleichen nötig, um den dreidimensionalen Effekt beim Betrachten der Anzeige hervorzurufen. Autostereoskopische Anzeigevorrichtungen sind z.B. in der DE 102 25 385 A1 und in der DE 10 2005 017 313 A1 offenbart.

Alternativ zu einer autostereoskopischen Darstellung können auch andere dreidimensionale Darstellungen eingesetzt werden, z.B. holographische Anzeigen. Solche sind z.B. in der DE 37 40 557 A1, DE 197 04 740 A1, GB 2 212 964 A und in der EP 0 891 887 B1 beschrieben.

Es kann bei allen bislang beschriebenen Ausführungsvarianten vorgesehen sein, dass der Übergang von der flächig wahrnehmbaren Darstellung in die räumlich wahrnehmbare Darstellung in mehreren Zwischenstufen erfolgt. Eine solche Animation kann noch mehr die Aufmerksamkeit des Nutzers auf den Bedienbereich lenken, dem die Bedienabsicht zugeordnet wurde.

Dabei können die Zwischenstufen zeitlich und im Umfang unterschiedlich ausgestaltet sein. Sie können insbesondere in einem so kurzen Zeitraum abgeschlossen sein, in dem die Durchführung einer Bedienaktion durch Berühren eines bedienbaren graphischen Objekts im Bedienbereich auf der Anzeigefläche unmöglich ist. Beispielsweise wird die Bedienabsicht so rechtzeitig erfasst und die Zwischenstufen so schnell nacheinander angezeigt, dass z.B. die bedienende Hand des Nutzers den Bedienbereich der Anzeigefläche nicht hätte erreichen können. Die Animation kann aber auch einen längeren Zeitraum durchgeführt werden, sodass der Nutzer, wenn er während einer Eingabe unterbrochen wird, weiterhin auf den Bedienbereich aufmerksam gemacht wird. Insbesondere kann ein dreidimensional wirkendes herausfahren oder versenken von Schaltflächen oder das räumliche Drehen eines Objekts animiert werden.

Ein bedienbares Objekt im Bedienbereich kann visuell derart hervorgehoben werden, dass es räumlich in Betrachtungsrichtung verändert wahrgenommen wird. Alternativ oder auch zusätzlich kann ein nicht bedienbares Objekt im Bedienbereich visuell derart verändert werden, dass es räumlich von der Betrachtungsrichtung weggerichtet verändert wahrgenommen wird. Eine solche Darstellung ist besonders intuitiv wahrnehmbar, auch wenn der Nutzer die Anzeigefläche nicht mit ungeteilter Aufmerksamkeit betrachten kann.

Die berührungslose Erfassung der Bedienabsicht in dem Raum in Betrachtungsrichtung vor der Anzeigefläche kann beispielsweise über eine räumlich auflösende Annäherungserfassung, insbesondere über eine Lichtschranke und/oder über ein Kamerasystem erfolgen. Hierdurch kann der Raum vor der Anzeigefläche gut aufgelöst werden und es können die Graphikdaten dann in Abhängigkeit dieser räumlichen Auflösung dreidimensional berechnet werden. Alternativ kann die berührungslose Erfassung der Bedienabsicht auch durch eine kapazitive Erfassung oder eine Erfassung der Blickrichtung des Nutzers erfolgen.

Die Berechnung der dreidimensionalen Graphikdaten des visuell hervorgehobenen graphischen Objekts können in perspektivischem Zusammenhang mit dem Raum vor der Anzeigefläche stehen, in welchem die Bedienabsicht berührungslos erfasst wurde. Hierdurch sind sehr realitätsnahe Bedienabläufe erzielbar, bei welchen die Bewegung der Nutzerhand, wenn gerade die Bedienabsicht erkannt wird, linear zu den bedienbaren Objekten im Bedienbereich verlängert wird, sodass diese der Nutzerhand z.B. virtuell entgegenkommen.

Die erfindungsgemäße Vorrichtung zum Bereitstellen einer Nutzerschnittstelle, insbesondere in einem Fahrzeug, umfasst eine Anzeigefläche mit einer berührungsempfindlichen Oberfläche zum Darstellen von graphischen Objekten und zum Erfassen einer Bedienaktion durch Berühren eines der graphischen Objekte sowie eine Erfassungseinrichtung zum berührungslosen Erfassen einer Bedienabsicht in einem Raum in Betrachtungsrichtung vor der Anzeigefläche. Sie umfasst des Weiteren eine Steuereinheit, welche mit der Anzeigefläche und der Erfassungseinrichtung verbunden ist und mittels derer der Raum, in dem eine Bedienabsicht erfasst wurde, einem Bedienbereich auf der Anzeigefläche zuordenbar ist. Die erfindungsgemäße Vorrichtung ist dadurch gekennzeichnet, dass mittels der Steuereinheit
- bei der Zuordnung der Bedienabsicht zu dem Bedienbereich aus einer erfassten Bedienrichtung ein der Bedienabsicht zugeordneter Bedienbereich ermittelbar ist,
- die in diesem Bedienbereich dargestellten graphischen Objekte in unterschiedliche Klassen nach dem Kriterium einteilbar sind, ob das betreffende graphische Objekt in der vorliegenden Bediensituation bedienbar ist oder nicht,
- für die bedienbaren graphischen Objekte dreidimensionale Graphikdaten berechenbar sind und von der flächig wahrnehmbaren Darstellung in der Ebene der Anzeigefläche in eine räumlich wahrnehmbare Darstellung überführbar sind, und
- die in der konkreten Situation nicht bedienbaren graphischen Objekte unverändert flächig darstellbar sind oder in einer anderen Art und Weise graphisch veränderbar sind.

Die Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungselement, z.B. dem Finger des Nutzers, gestreuten und/oder reflektierten Anteils der Detektionsstrahlung umfassen. Sie kann insbesondere so ausgebildet sein, das Betätigungselement in dem Detektionsbereich anhand der Intensität der empfangenen Detektionsstrahlung zu erkennen. Die Annäherungserfassungseinrichtung kann ferner verschiedene Leuchtmittel für einzelne Zonen im Detektionsbereich umfassen, die jeweils elektromagnetische Detektionsstrahlung in die jeweilige Zone emittieren. Ferner kann eine Modulationsvorrichtung zum Modulieren der emittierten Detektionsstrahlung vorgesehen sein, so dass sich die Detektionsstrahlung, die in die einzelnen Zonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Zone die Detektionsstrahlung an einem Betätigungselement gestreut oder reflektiert wurde. Die Detektionszonen können sich insbesondere parallel zu einer Anordnung von Bedienelementen erstrecken. Die Detektionszonen unterscheiden sich jedoch hinsichtlich des Abstands von den Bedienelementen in Richtung senkrecht zu diesen. Mittels der Annäherungserfassungseinrichtung kann somit der Aufenthalt eines Betätigungselements separat für jede Zone bestimmt werden, so dass sich der Abstand des Betätigungselements von den Bedienelementen einfach ermitteln lässt.

Erfindungsgemäß ist des Weiteren ein Fahrzeug mit einer solchen Vorrichtung zum Bereitstellen einer Nutzerschnittstelle ausgestattet:

Die Erfindung wird nun anhand von Ausführungsbeispielen mit Bezug zu den Figuren näher erläutert.
- Figur 1: zeigt ein Cockpit eines Fahrzeugs, in dem eine erfindungsgemäße Vorrichtung zum Bereitstellen einer Nutzerschnittstelle angeordnet ist,
- Figur 2: zeigt schematisch den Aufbau eines Ausführungsbeispiels einer erfindungsgemäßen Vorrichtung zum Bereitstellen einer Nutzersch nittstelle,
- die Figuren 3A - 3B: zeigen schematisch graphische Objekte auf einer Anzeigefläche, die gemäß einem Ausführungsbeispiel des erfindungsgemäßen Verfahrens von einer flächig wahrnehmbaren in eine räumlich wahrnehmbare Darstellung verändert wurden,
- die Figuren 4A - 4E: zeigen verschiedene flächig wahrnehmbare graphische Objekte und
- die Figuren 5A - 5E: zeigen die graphischen Objekte aus den Figuren 4A - 4E, die gemäß Ausführungsbeispielen des erfindungsgemäßen Verfahrens von einer flächig wahrnehmbaren in eine räumlich wahrnehmbare Darstellung verändert wurden.

Die erfindungsgemäße Vorrichtung und das erfindungsgemäße Verfahren wird im Folgenden anhand eines Ausführungsbeispiels für eine Nutzerschnittstelle in einem Fahrzeug erläutert. Es wird jedoch darauf hingewiesen, dass die Nutzerschnittstelle in gleicher Weise auch für andere Einrichtungen zum Anzeigen von Informationen und zum Bedienen dazugehöriger Funktionen eingesetzt werden kann.

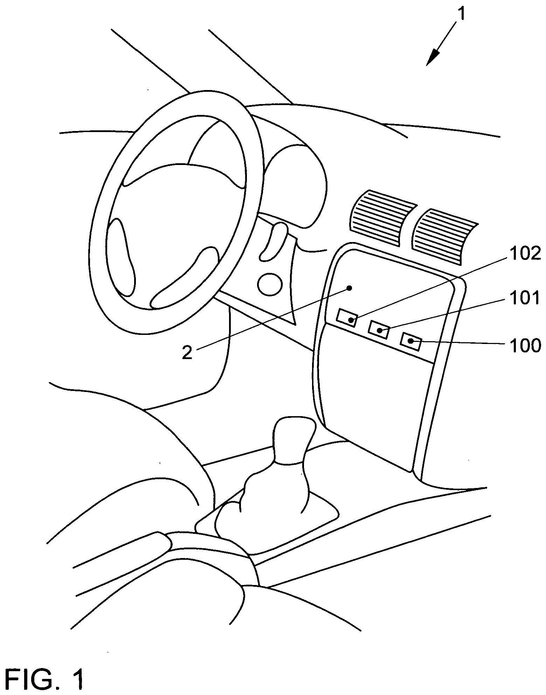

In der Figur 1 ist ein Cockpit eines Fahrzeugs 1 dargestellt, in dem im oberen Bereich der Mittelkonsole eine Anzeigefläche mit einer berührungsempfindlichen Oberfläche, ein sogenannter Touchscreen 2, angeordnet ist, sodass auf dem Touchscreen 2 dargestellte graphische Objekte 100 - 102 von Fahrer und Beifahrer gut eingesehen und ggf. bedient werden können. Der Touchscreen 2 kann auch an anderer geeigneter Position angeordnet sein.

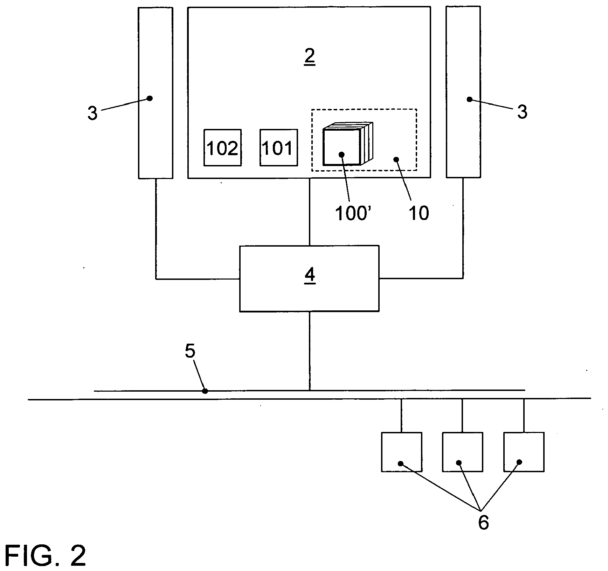

Der Touchscreen 2 gehört zu einer erfindungsgemäßen Vorrichtung zum Bereitstellen einer Nutzerschnittstelle, deren Aufbau in der Figur 2 anhand eines Ausführungsbeispiels kurz dargestellt wird. Neben dem Touchscreen 2 ist eine Annäherungserfassungseinrichtung 3 angeordnet, die einen Raum in Betrachtungsrichtung vor dem Touchscreen 2 überwacht. Mittels der Annäherungserfassungseinrichtung 3 kann insbesondere eine einem Bedienbereich 10 auf dem Touchscreen 2 zugeordnete Bedienabsicht berührungslos erfasst werden, indem z.B. ein in den Raum vor dem Touchscreen 2 eintretender Gegenstand zum Bedienen der graphischen Oberfläche des Touchscreens 2, z.B. der Finger des Nutzers, detektiert wird. Die Annäherungserfassungseinrichtung ist beispielsweise eine an sich bekannte zonal auflösende Infrarotlichtsch ranke.

Der Touchscreen 2 und die Annäherungserfassungseinrichtung 3 sind mit einer Steuereinheit 4 verbunden. Die Steuereinheit 4 ist ferner über den Datenbus 5 im Fahrzeug mit diversen Funktionseinrichtungen 6 verbunden, die Daten zu den graphischen Objekten 100 - 102 bereitstellen und deren ausführbare Funktionen über die graphische Nutzerschnittstelle gesteuert werden können. Die Funktionseinrichtungen 6 umfassen beispielsweise ein Navigationsgerät, Fahrerassistenzsysteme, Infotainmenteinrichtungen z.B. zur Informationswiedergabe oder zum Abspielen von Musik oder Unterhaltungsprogrammen sowie Fahrzeugkomforteinrichtungen insbesondere zum Einstellen der Klimatisierungsanlage im Fahrzeug 1.

Die Steuereinheit 4 empfängt die Signale der Annäherungserfassungseinrichtung 3 und wertet diese aus, indem einer Bedienabsicht ein Bedienbereich 10 zugeordnet wird. Diese Zuordnung kann auf verschiedene, an sich bekannte Art und Weise erfolgen. Es wird beispielsweise das Eindringen des Fingers 11 des Nutzers in eine Zone vor dem Touchscreen 2 erfasst und der in Betrachtungsrichtung dahinter liegende Bereich des Touchscreens 2 als Bedienbereich 10 interpretiert. Die Zuordnung kann auch derart erfolgen, dass aus der Bewegung eines erfassten Gegenstandes eine Bedienabsicht für denjenigen Bedienbereich 10 zugeordnet wird, der sich um den Schnittpunkt erstreckt, der sich aus der verlängerten Linie der Bewegungsrichtung mit der Oberfläche des Touchscreens 2 ergibt.

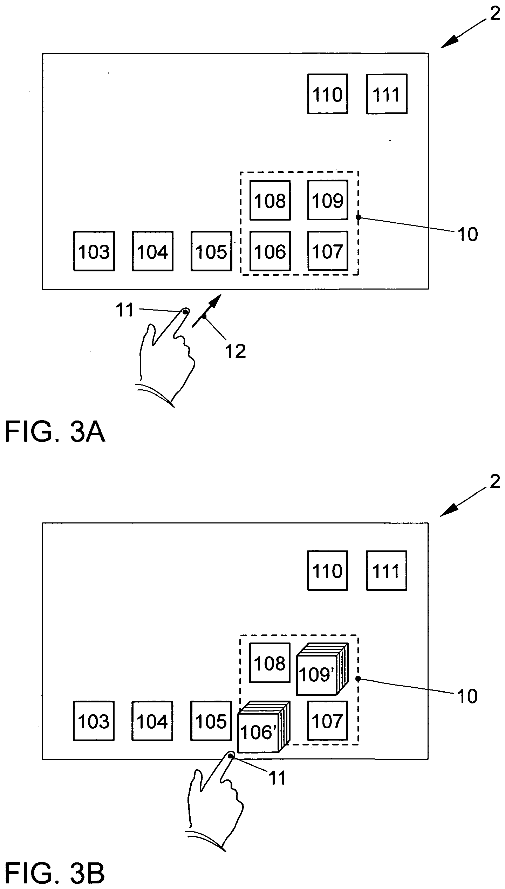

Das in dem Bedienbereich 10 angezeigte graphische Objekt wird bei Erkennen einer Bedienabsicht nun visuell hervorgehoben, indem für das graphische Objekt dreidimensionale Graphikdaten berechnet werden und das graphische Objekt von einer flächig wahrnehmbaren Darstellung 100 in eine räumlich wahrnehmbare Darstellung 100' überführt wird, wie dies weiter unten mit Bezug zu den Figuren 3A - 5E im Zusammenhang mit dem erfindungsgemäßen Verfahren noch näher erläutert wird.

Das erfindungsgemäße Verfahren wird nun anhand von Ausführungsbeispielen mit Bezug zu den Figuren 3A - 5E näher beschrieben. Dazu kann die mit Bezug zu den Figuren 1 und 2 beschriebene Vorrichtung zum Bereitstellen einer Nutzerschnittstelle verwendet werden.

In den Figuren 3A - 3B ist der Beginn eines Bedienablaufs gezeigt, bei welchem ein Nutzer eine Funktionseinrichtung 6 über die erfindungsgemäße graphische Nutzerschnittstelle bedienen möchte. Dem Nutzer werden eine Vielzahl von graphischen Objekten in einer flächig wahrnehmbaren Darstellung 103 - 111 angezeigt. Zunächst wird eine allgemeine Bedienabsicht erkannt, wenn der Finger 11 des Nutzers in die Detektionszone vor dem Touchscreen 2 eintritt. Durch mehrere zeitlich nacheinander erfolgende Erfassungen der Position des Fingers 11 kann eine Bedienrichtung 12 ermittelt werden, wie dies in der Figur 3A dargestellt ist.

Aus der Bedienrichtung 12 wird ein der Bedienabsicht zugeordneter Bedienbereich 10 ermittelt. Die in diesem Bedienbereich 10 dargestellten graphischen Objekte werden nun in unterschiedliche Klassen eingeteilt und zwar wenigstens nach dem Kriterium, ob das betreffende graphische Objekt in der vorliegenden Bediensituation bedienbar ist oder nicht. Für die bedienbaren graphischen Objekte 106, 109 werden sodann dreidimensionale Graphikdaten berechnet und von der flächig wahrnehmbaren Darstellung in eine räumlich wahrnehmbare Darstellung 106', 109' überführt, wie dies in der Figur 3B dargestellt ist.

Zur Erzielung der räumlich wahrnehmbaren Darstellung können in einer Ausführungsform aus den dreidimensionalen Graphikdaten sekundäre Graphikdaten für eine perspektivische zweidimensionale Darstellung berechnet werden und das betreffende graphische Objekt auf Basis der sekundären Graphikdaten zweidimensional perspektivisch dargestellt werden, sodass für das menschliche Auge eine räumlich wahrnehmbare Darstellung entstehet. Alternativ dazu können aber auch wirkliche dreidimensionale Darstellungen zum Einsatz kommen, wie beispielsweise stereoskopische, autostereoskopische oder holographische Bilderzeugungen. In einer weiteren Ausführungsform kann eine räumlich wahrnehmbare Darstellung auch dadurch erzielt werden, dass jeweils Teilbilder des graphischen Objekts auf in Betrachtungsrichtung hintereinander liegenden, wenigstens teiltransparenten Flächen erzeugt wird. Es kann sich z.B. um ein herkömmliches graphisches Display mit einer ersten Bildebene zur Darstellung eines ersten Teilbildes und einer darüberliegenden teiltransparenten Scheibe handeln, auf die ein weiteres Teilbild projiziert werden kann.

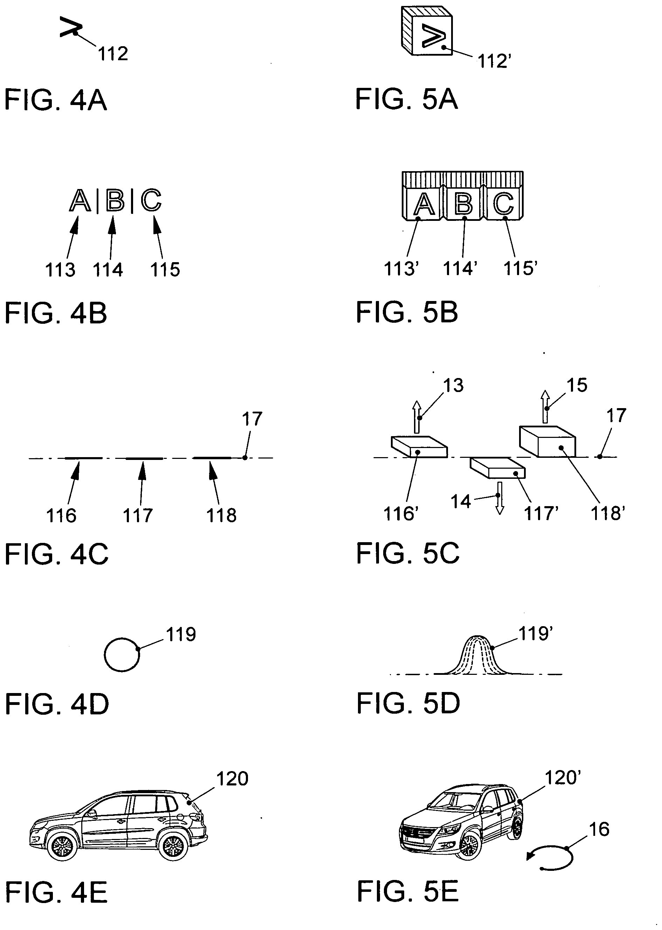

In einer Ausgestaltung des erfindungsgemäßen Verfahrens werden die in der konkreten Situation nicht bedienbaren graphischen Objekte 107, 108 unverändert flächig dargestellt. In einer dazu alternativen Ausführungsform werden die nicht bedienbaren graphischen Objekte in einer anderen Art und Weise graphisch verändert. Verschiedene Varianten zur Überführung von flächig wahrnehmbaren Darstellungen in räumlich wahrnehmbare Darstellungen sind im Folgenden mit Bezug zu den Figuren 4A - 4E und 5A - 5E dargestellt. Dabei zeigen die Figuren 4A - 4E die flächig wahrnehmbaren Darstellungen und die Figuren 5A - 5E die dazugehörigen räumlich wahrnehmbaren Darstellungen.

In der Figur 4A wird das graphische Objekt von der flächig wahrnehmbaren Darstellung 112 derart verändert, dass es aus der Anzeigeebene in eine räumlich wahrnehmbare Darstellung 112' hervortritt (Figur 5A). Dabei kann die Richtung, in welche die räumlich wahrnehmbare Darstellung 112' hervortritt, dieselbe wie die Bedienrichtung 12 sein, sodass das graphische Objekt durch die erkannte Bedienabsicht dem bedienenden Finger entgegenzukommen scheint.

In der Figur 4B sind mehrere nebeneinander angezeigte graphische Objekte 113 - 115 flächig dargestellt. Bei der Umwandlung in die räumlich wahrnehmbare Darstellung 113 ' - 115' tritt wieder das graphische Objekt aus der ursprünglichen Bildebene hervor und der Rahmen des graphischen Objekts erhält eine konturierte Liniengebung, die besonders gut räumlich wahrzunehmen ist.

In der Figur 4C sind auf einer Bezugslinie 17 mehrere linienförmige graphische Objekte 116 - 118 dargestellt, die bei der Umwandlung in die räumlich wahrnehmbare Darstellung 116' - 118' derart verändert werden, dass sie als Quader auf dieser Bezugslinie 17 erscheinen. Dabei treten die Quader allerdings in unterschiedliche Richtungen hervor, der Quader 116' wird ausgehend von der Bezugslinie 17 in Richtung und Stärke gemäß der Animationsrichtung 13 leicht nach oben gezogen dargestellt und der Quader 118' wird auf dieselbe Weise, jedoch in stärkerem Maße, in die Animationsrichtung 15 verändert. Der Quader 117' wird hingegen in die entgegengesetzte Animationsrichtung 14 nach unten versenkt dargestellt.

Eine solche Darstellung eignet sich insbesondere zur Visualisierung verschiedener Klassen von graphischen Objekten. Das graphische Objekt 117 ist beispielsweise in der konkreten Situation nicht bedienbar. Das Versenken des Quaders 117' nach unten hilft dabei dem Nutzer zu erkennen, dass eine Bedienung dieses graphischen Objekts in der gegebenen Situation nicht vorgesehen ist. Die anderen Objekte 116, 118 gehören zu Klassen, die in der jeweiligen Situation bedienbar sind. Dabei können mehrere Klassen dieser bedienbaren Objekte gebildet werden, indem z.B. die Wahrscheinlichkeit, dass der Nutzer das jeweilige Objekt bedienen will, bzw. eine systemseitige Empfehlung für den Nutzer, das jeweilige Objekt zu bedienen, mit in die Objektklassifizierung einfließen kann. Die starke Animation des Objekts 118' kann beispielsweise den Nutzer darauf hinweisen, dass eine Bedienung über dieses Objekt in der gegebenen Situation nun am zielführendsten ist.

In der Figur 4D ist ein rundes Objekt in einer zweidimensional wahrnehmbaren Darstellung 119 gezeigt, welches in eine räumlich wahrnehmbare Darstellung 119' als Knubbel oder hervorstehender Tropfen erscheint.

In der Figur 4E ist schließlich ein graphisches Objekt als flächige Darstellung 120 gezeigt, das derart animiert wird, dass es in einer räumlichen Drehung 16 mehrere räumlich wahrnehmbare Darstellungen 120' des graphischen Objekts nacheinander durchläuft und so nicht nur besser als graphisches Objekt wahrgenommen wird, sondern zudem auch die Aufmerksamkeit des Nutzers auf dieses graphische Objekt gelenkt wird.

### Bezugszeichenliste

- 1: Fahrzeug
- 2: Touchscreen
- 3: Annäherungserfassungseinrichtung
- 4: Steuereinheit
- 5: Datenbus im Fahrzeug
- 6: Funktionseinrichtungen
- 10: Bedienbereich
- 11: Finger des Nutzers
- 12: Bedienrichtung
- 13 - 16: Animationsrichtung
- 17: Bezugslinie
- 100 - 120: graphische Objekte in flächig wahrnehmbarer Darstellung
- 100'- 120': graphische Objekte in räumlich wahrnehmbarer Darstellung

## Patentansprüche

1. Verfahren zum Bereitstellen einer Nutzerschnittstelle, insbesondere in einem Fahrzeug (1), bei dem
- mehrere graphische Objekte (100 - 120) auf einer Anzeigefläche (2) mit einer berührungsempfindlichen Oberfläche dargestellt werden,
- eine einem Bedienbereich (10) der Anzeigefläche (2) zuordenbaren Bedienabsicht berührungslos in einem Raum in Betrachtungsrichtung vor der Anzeigefläche (2) erfasst wird und
- eine Bedienaktion durch Berühren eines der graphischen Objekte (100 - 120) in dem Bedienbereich (10) der Anzeigefläche (2) durchgeführt wird,
**dadurch gekennzeichnet,**
- **dass** bei der Zuordnung der Bedienabsicht zu dem Bedienbereich (10) aus einer erfassten Bedienrichtung (12) ein der Bedienabsicht zugeordneter Bedienbereich (10) ermittelt wird,
- **dass** die in diesem Bedienbereich (10) dargestellten graphischen Objekte (100 - 120) in unterschiedliche Klassen nach dem Kriterium eingeteilt werden, ob das betreffende graphische Objekt (100 - 120) in der vorliegenden Bediensituation bedienbar ist oder nicht,
- **dass** für die bedienbaren graphischen Objekte (106, 109) dreidimensionale Graphikdaten berechnet und von der flächig wahrnehmbaren Darstellung in der Ebene der Anzeigefläche (2) in eine räumlich wahrnehmbare Darstellung (106', 109') überführt werden, und
- **dass** die in der konkreten Situation nicht bedienbaren graphischen Objekte (107, 108) unverändert flächig dargestellt werden oder in einer anderen Art und Weise graphisch verändert werden.

2. Verfahren nach Anspruch 1,
**dadurch gekennzeichnet, dass**
- aus den dreidimensional berechneten Graphikdaten sekundäre Graphikdaten für eine perspektivische zweidimensionale Darstellung berechnet werden und
- das graphische Objekt auf Basis der sekundären Graphikdaten zweidimensional perspektivisch dargestellt wird.

3. Verfahren nach Anspruch 1,
**dadurch gekennzeichnet, dass**
- die Berechnung der dreidimensionalen Graphikdaten die Berechnung mehrerer stereoskopischer Ansichten des graphischen Objekts umfassen und
- das visuell hervorgehobene graphische Objekt stereoskopisch dargestellt wird.

4. Verfahren nach einem der vorangegangenen Ansprüche,
**dadurch gekennzeichnet,**
**dass** der Übergang von der flächig wahrnehmbaren Darstellung (100 - 120) in die räumlich wahrnehmbare Darstellung (100' - 120') in mehreren Zwischenstufen erfolgt.

5. Verfahren nach Anspruch 1,
**dadurch gekennzeichnet,**
**dass** ein bedienbares Objekt im Bedienbereich visuell derart hervorgehoben wird, dass es räumlich in Betrachtungsrichtung verändert wahrgenommen wird (116', 118'), und/oder ein nicht bedienbares Objekt im Bedienbereich visuell derart verändert wird, dass es räumlich von der Betrachtungsrichtung weggerichtet verändert wahrgenommen (117') wird.

6. Verfahren nach einem der vorangegangenen Ansprüche,
**dadurch gekennzeichnet,**
**dass** die berührungslose Erfassung der Bedienabsicht in dem Raum in Betrachtungsrichtung vor der Anzeigefläche (2) über eine räumlich auflösende Annäherungserfassung (3), insbesondere über eine Lichtschranke und/oder über ein Kamerasystem erfolgt.

7. Verfahren nach einem der vorangegangenen Ansprüche,
**dadurch gekennzeichnet,**
**dass** die Berechnung der dreidimensionalen Graphikdaten des visuell hervorgehobenen graphischen Objekts in perspektivischem Zusammenhang mit dem Raum vor der Anzeigefläche (2) stehen, in welchem die Bedienabsicht berührungslos erfasst wurde.

8. Vorrichtung zum Bereitstellen einer Nutzerschnittstelle, insbesondere in einem Fahrzeug (1), umfassend
- eine Anzeigefläche (2) mit einer berührungsempfindlichen Oberfläche zum Darstellen von graphischen Objekten (100 - 120) und zum Erfassen einer Bedienaktion durch Berühren eines der graphischen Objekte,
- eine Erfassungseinrichtung (3) zum berührungslosen Erfassen einer Bedienabsicht in einem Raum in Betrachtungsrichtung vor der Anzeigefläche (2) und
- eine Steuereinheit (4), welche mit der Anzeigefläche (2) und der Erfassungseinrichtung (3) verbunden ist und mittels derer der Raum, in dem eine Bedienabsicht erfasst wurde, einem Bedienbereich (10) auf der Anzeigefläche (2) zuordenbar ist,
**dadurch gekennzeichnet,**
**dass** mittels der Steuereinheit (4)
- bei der Zuordnung der Bedienabsicht zu dem Bedienbereich (10) aus einer erfassten Bedienrichtung (12) ein der Bedienabsicht zugeordneter Bedienbereich (10) ermittelbar ist,
- die in diesem Bedienbereich (10) dargestellten graphischen Objekte (100 - 120) in unterschiedliche Klassen nach dem Kriterium einteilbar sind, ob das betreffende graphische Objekt (100 - 120) in der vorliegenden Bediensituation bedienbar ist oder nicht,
- für die bedienbaren graphischen Objekte (106, 109) dreidimensionale Graphikdaten berechenbar sind und von der flächig wahrnehmbaren Darstellung in der Ebene der Anzeigefläche (2) in eine räumlich wahrnehmbare Darstellung (106', 109') überführbar sind, und
- die in der konkreten Situation nicht bedienbaren graphischen Objekte (107, 108) unverändert flächig darstellbar sind oder in einer anderen Art und Weise graphisch veränderbar sind.

## Claims

1. Method for providing a user interface, particularly in a vehicle (1), in which
- a plurality of graphical objects (100 - 120) are presented on a display panel (2) having a touch-sensitive surface,
- an operating intention that can be attributed to an operating area (10) of the display panel (2) is contactlessly sensed in a space in the direction of view in front of the display panel (2), and
- an operator action is performed by touching one of the graphical objects (100 - 120) in the operating area (10) of the display panel (2),
**characterized**
- **in that** the attribution of the operating intention to the operating area (10) results in an operating area (10) attributed to the operating intention being ascertained from a sensed operating direction (12),
- **in that** the graphical objects (100 - 120) presented in this operating area (10) are categorized into different classes according to the criterion of whether or not the relevant graphical object (100 - 120) is operable in the present operating situation,
- **in that** three-dimensional graphics data are calculated for the operable graphical objects (106, 109) and are converted from the two-dimensionally perceptible presentation in the plane of the display panel (2) into a three-dimensionally perceptible presentation (106', 109'), and
- **in that** the graphical objects (107, 108) that are not operable in the specific situation continue to be presented two dimensionally or are graphically altered in another way.

2. Method according to Claim 1,
**characterized in that**
- secondary graphics data for a perspective two-dimensional presentation are calculated from the three-dimensionally calculated graphics data, and
- the graphical object is presented in two-dimensionally perspective form on the basis of the secondary graphics data.

3. Method according to Claim 1,
**characterized in that**
- the calculation of the three-dimensional graphics data comprises the calculation of a plurality of stereoscopic views of the graphical object, and
- the visually highlighted graphical object is presented in stereoscopic form.

4. Method according to one of the preceding claims,
**characterized**
**in that** the transition from the two-dimensionally perceptible presentation (100 - 120) to the three-dimensionally perceptible presentation (100' - 120') takes place in a plurality of intermediate stages.

5. Method according to Claim 1,
**characterized**
**in that** an operable object in the operating area is visually highlighted such that it is perceived with a three-dimensional alteration in the direction of view (116', 118'), and/or an inoperable object in the operating area is visually altered such that it is perceived with a three-dimensional alteration in a direction away from the direction of view (117').

6. Method according to one of the preceding claims,
**characterized**
**in that** the contactless sensing of the operating intention in the space in the direction of view in front of the display panel (2) is effected using a three-dimensionally resolving proximity sensing unit (3), particularly using a light barrier and/or using a camera system.

7. Method according to one of the preceding claims,
**characterized**
**in that** the calculation of the three-dimensional graphics data for the visually highlighted graphical object is in a perspective relationship with the space in front of the display panel (2) in which the operating intention has been contactlessly sensed.

8. Apparatus for providing a user interface, particularly in a vehicle (1), comprising
- a display panel (2) having a touch-sensitive surface for presenting graphical objects (100 - 120) and for sensing an operator action by virtue of one of the graphical objects being touched,
- a sensing device (3) for contactlessly sensing an operating intention in a space in the direction of view in front of the display panel (2) and
- a control unit (4) that is connected to the display panel (2) and to the sensing device (3) and by means of which the space in which an operating intention has been sensed can be attributed to an operating area (10) on the display panel (2),
**characterized**
**in that** the control unit (4) can be used
- to ascertain an operating area (10) attributed to the operating intention from a sensed operating direction (12) during the attribution of the operating intention to the operating area (10),
• to categorize the graphical objects (100 - 120) presented in this operating area (10) into different classes according to the criterion of whether or not the relevant graphical object (100 - 120) is operable in the present operating situation,
• to calculate three-dimensional graphics data for the operable graphical objects (106, 109) and to convert said data from the two-dimensionally perceptible presentation in the plane of the display panel (2) into a three-dimensionally perceptible presentation (106', 109'), and
• to continue to present the graphical objects (107, 108) that are not operable in the specific situation two dimensionally or to graphically alter them in another way.

## Revendications

1. Procédé de mise à disposition d'une interface utilisateur, en particulier dans un véhicule (1), dans lequel
- plusieurs objets graphiques (100 - 120) sont représentés sur une surface d'affichage (2) ayant une surface sensible au toucher,
- une intention de commande pouvant être affectée à une zone de commande (10) de la surface d'affichage (2) est détectée sans contact dans un espace dans une direction d'observation à l'avant de la surface d'affichage (2) et
- une action de commande est effectuée en touchant l'un des objets graphiques (100-120) dans la zone de commande (10) de la surface d'affichage (2),
**caractérisé en ce que**,
- lors de l'affectation de l'intention de commande à la zone de commande (10), une zone de commande (10) affectée à l'intention de commande est déterminée à partir d'une direction de commande détectée (12),
- **en ce que** les objets graphiques (100-120) représentés dans cette zone de commande (10) sont répartis dans différentes classes selon que l'objet graphique concerné (100 - 120) peut ou non être commandé dans la situation de commande actuelle,
- **en ce que** des données graphiques tridimensionnelles sont calculées pour les objets graphiques pouvant être commandés (106, 109) et converties de la représentation en deux dimensions perceptible dans le plan de la surface d'affichage (2) en une représentation perceptible dans l'espace (106', 109') et
- **en ce que** les objets graphiques (107, 108) qui ne peuvent pas être commandés dans la situation concrète sont représentés en deux dimensions sans être modifiés ou sont modifiés graphiquement d'une autre manière.

2. Procédé selon la revendication 1, **caractérisé en ce que**
- des données graphiques secondaires pour une représentation bidimensionnelle en perspective sont calculées à partir des données graphiques tridimensionnelles calculées et
- **en ce que** l'objet graphique est représenté en perspective bidimensionnelle sur la base des données graphiques secondaires.

3. Procédé selon la revendication 1, **caractérisé en ce que**
- le calcul des données graphiques tridimensionnelles comprend le calcul de plusieurs vues stéréoscopiques de l'objet graphique et
- **en ce que** l'objet graphique mis en évidence visuellement est affiché de manière stéréoscopique.

4. Procédé selon l'une des revendications précédentes,
**caractérisé en ce que** le passage de la représentation perceptible en deux dimensions (100-120) à la représentation perceptible dans l'espace (100-120') s'effectue en plusieurs stades intermédiaires.

5. Procédé selon la revendication 1,
**caractérisé en ce qu'**un objet pouvant être commandé dans la zone de commande est mis en évidence visuellement de manière à ce qu'il soit perçu comme étant modifié spatialement dans la direction d'observation (116', 118') et/ou **en ce qu'**un objet ne pouvant pas être commandé est modifié visuellement dans la zone de commande de manière à ce qu'il soit perçu comme étant spatialement modifié en dehors de la direction d'observation (117').

6. Procédé selon l'une des revendications précédentes,
**caractérisé en ce que** la détection sans contact de l'intention de commande dans l'espace dans la direction d'observation à l'avant de la surface d'affichage (2) s'effectue par une détection de proximité (3) spatialement résolue, en particulier par une barrière lumineuse et/ou par un système de caméra.

7. Procédé selon l'une des revendications précédentes,
**caractérisé en ce que** le calcul des données graphiques tridimensionnelles de l'objet graphique mis en évidence visuellement présente une relation de perspective avec l'espace, situé à l'avant de la surface d'affichage (2), dans lequel l'intention de commande a été détectée sans contact.

8. Dispositif de mise à disposition d'une interface utilisateur, en particulier dans un véhicule (1), comprenant
- une surface d'affichage (2) ayant une surface sensible au toucher pour afficher des objets graphiques (100-120) et pour détecter une action de commande en touchant l'un des objets graphiques,
- un dispositif de détection (3) permettant la détection sans contact d'une intention de commande dans un espace dans une direction d'observation à l'avant de la surface d'affichage (2) et
- une unité de commande (4) qui est reliée à la surface d'affichage (2) et au dispositif de détection (3) et au moyen de laquelle l'espace dans lequel une intention de commande a été détectée peut être affecté à une zone de commande (10) sur la surface d'affichage (2), **caractérisé en ce que**,
au moyen de l'unité de commande (4),
- lors de l'affectation de l'intention de commande à la zone de commande (10), une zone de commande (10) affectée à l'intention de commande peut être déterminée à partir d'une direction de commande détectée (12),
- les objets graphiques (100 - 120) représentés dans cette zone de commande (10) peuvent être répartis dans différentes classes selon que l'objet graphique concerné (100 - 120) peut ou non être commandé dans la situation de commande actuelle,
- des données graphiques tridimensionnelles peuvent être calculées pour les objets graphiques pouvant être commandés (106, 109) et peuvent être converties de la représentation en deux dimensions perceptible dans le plan de la surface d'affichage (2) en une représentation perceptible dans l'espace (106', 109') et
- les objets graphiques (107, 108) qui ne peuvent pas être commandés dans la situation concrète peuvent être représentés en deux dimensions sans être modifiés ou peuvent être modifiés graphiquement d'une autre manière.
